(19) Europäisches Patentamt

European Patent Office

Office européen des brevets

(11) **EP 4 756 744 A1**

(12) **EUROPEAN PATENT APPLICATION**

(43) Date of publication:
**10.06.2026 Bulletin 2026/24**

(21) Application number: **25220464.9**

(22) Date of filing: **03.12.2025**

(51) International Patent Classification (IPC):
*G06V 20/58* (2022.01)    *G06V 10/25* (2022.01)
*G06V 10/62* (2022.01)    *G06V 10/776* (2022.01)
*G06V 10/82* (2022.01)    *G06V 20/40* (2022.01)
*G06V 20/64* (2022.01)

(52) Cooperative Patent Classification (CPC):
**G06V 20/58; G06V 10/25; G06V 10/62;
G06V 10/776; G06V 10/82; G06V 20/46;
G06V 20/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024  CN 202411799088**

(71) Applicant: **Beijing Baidu Netcom
Science Technology Co., Ltd.
Beijing 100085 (CN)**

(72) Inventors:
• **CHEN, Yuqing
Beijing, 100085 (CN)**
• **XU, Jiaolong
Beijing, 100085 (CN)**

(74) Representative: **Hannke Bittner & Partner mbB
Regensburg
Prüfeninger Straße 1
93049 Regensburg (DE)**

(54) **METHOD AND APPARATUS FOR AUTOMATICALLY ANNOTATING AN OBSTACLE, AND RELATED DEVICES**

(57)    Provided is a method and apparatus for automatically annotating an obstacle and related devices, relating to the field of artificial intelligence technology, and in particular, to technologies fields of autonomous driving, neural network, deep learning and the like. The method includes: optimizing (S101) a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle; and determining (S102) a target pose of the target obstacle based on the optimized target parameter.

S101

Optimize a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle

S102

Determine a target pose of the target obstacle based on the optimized target parameter

FIG. 1

EP 4 756 744 A1

**Description**

TECHNICAL FIELD

The present disclosure relates to the field of artificial intelligence technology, in particular, to technologies fields of autonomous driving, neural network, deep learning and the like.

BACKGROUND

With continuous advancement of artificial intelligence technology, autonomous driving vehicles are gradually becoming an important component of future transportation. A core of autonomous driving technology lies in achieving autonomous driving of vehicles, which requires not only a capability of understanding surrounding environment but also an ability to handle various driving scenarios.

During this process, environmental perception technology plays a crucial role, especially in precise detection and recognition of obstacles, which have a decisive impact on ensuring safety of the autonomous driving vehicles and improving navigation efficiency of the autonomous driving vehicles. Meanwhile, obstacle detection relies on a large amount of annotated data.

SUMMARY

The present disclosure provides performance optimization method and apparatus for automatically annotating an obstacle, a device and a storage medium.

According to an aspect of the present disclosure, a method for automatically annotating an obstacle is provided, which includes:

optimizing a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle; and

determining a target pose of the target obstacle based on the optimized target parameter.

According to another aspect of the present disclosure, an apparatus for automatically annotating an obstacle is provided, which includes:

an optimization module configured to optimize a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle; and

a determination module configured to determine a target pose of the target obstacle based on the optimized target parameter.

According to another aspect of the present disclosure, an electronic device is provided, which includes:

at least one processor; and

a memory connected in communication with the at least one processor;

the memory stores an instruction executable by the at least one processor, and the instruction, when executed by the at least one processor, enables the at least one processor to execute the method of any embodiment in the present disclosure.

According to another aspect of the present disclosure, a non-transitory computer-readable storage medium storing a computer instruction thereon is provided, where the computer instruction is used to cause a computer to execute the method of any embodiment in the present disclosure.

According to another aspect of the present disclosure, a computer program product is provided, which includes a computer program, the computer program, when executed by a processor, implements the method of any embodiment in the present disclosure.

According to another aspect of the present disclosure, an autonomous driving vehicle is provided, including the electronic device as described above.

It should be understood that contents described in this part is not intended to identify key or important features of the embodiments of the present disclosure, nor is it intended to limit the scope of the present disclosure. The other features of the present disclosure are made easy to be understood by the following description.

BRIEF DESCRIPTION OF THE DRAWINGS

Accompanying drawings are provided for a better understanding of the present scheme and do not constitute a limitation of the present disclosure, in which:

FIG. 1 is a schematic flow diagram of a method for automatically annotating an obstacle according to an embodiment of the present disclosure;

FIG. 2 is a schematic flow diagram of determining a set of initial pixels of a target obstacle in a reference frame according to an embodiment of the present disclosure;

FIG. 3 is a schematic flow diagram of determining a re-projection error according to an embodiment of the present disclosure;

FIG. 4 is a whole flow diagram of a method for automatically annotating an obstacle according to an embodiment of the present disclosure;

FIG. 5 is a framework diagram of a BA service optimization process according to an embodiment of the present disclosure;

FIG. 6 is a structural diagram of an apparatus for automatically annotating an obstacle according to an embodiment of the present disclosure;

FIG. 7 is a block diagram of an electronic device for achieving a method for automatically annotating an obstacle according to an embodiment of the present disclosure.

DETAILED DESCRIPTION

Hereinafter, explanation of exemplary embodiments of the present disclosure will be made in conjunction with the accompanying drawings, which includes various details of the embodiments of the present disclosure to facilitate understanding and should be considered merely exemplary. Therefore, those having ordinary skill in the art should recognize that various changes and modifications may be made to the embodiments described herein without departing from the scope of the present disclosure. Similarly, for clarity and conciseness, descriptions of well-known functions and structures are omitted in the following descriptions.

Terms "first", "second" and the like in the present disclosure are only used for distinguishing similar objects, and are not necessarily used to describe a specific order or sequence. Furthermore, terms "include", "have" and any variations thereof are intended to cover non-exclusive inclusion, for example, including a series of steps or units. Methods, systems, products or devices are not necessarily limited to those steps or units explicitly listed, but may include other steps or units that are not explicitly listed or are inherent to these processes, methods, products or devices.

In the field of autonomous driving, a highly accurate environmental perception function is a key to ensuring safe and efficient navigation. A core of environmental perception is obstacle detection, and accurate recognition and localization of an obstacle are crucial for path planning and obstacle avoidance strategies. Detection and recognition of the obstacle require a large amount of annotated data.

In related technologies, some three-dimensional detection models that can automatically annotate a point cloud or a BEV (Bird's Eye Views) to obtain a three-dimensional position box of a detection target are provided. The three-dimensional position box provided by a 3D detection model includes a pose of the detection target (such as a position center, an orientation, a size), as well as information such as a category.

Especially, implementation of object detection by the three-dimensional detection models relies on a large amount of annotated data. These data include two categories of a dynamic target and a static target. Advantages and disadvantages of annotation methods greatly affect accuracy and an annotation ability of the three-dimensional detection models for implementing object detection. Especially in the field of autonomous driving, quality of the annotation methods may affect actual sensory experience of autonomous driving. The annotation ability largely determines a perception ability of autonomous driving to a surrounding obstacle, while an annotation sight distance determines an upper limit of an autonomous driving system.

However, there are some shortcomings in automatic annotation methods of an obstacle in related technologies: firstly, a scanning range of a conventional radar is limited, such as for a dynamic target at a long distance, a static target at a medium to long distance, or a low-rise static target, a scanned point cloud is very sparse, which results in limited annotation abilities for both manual annotation and model-based automatic annotation methods; and ultimately, an upper limit of abilities of the three-dimensional detection models is limited; secondly, some automatic annotation methods require first completing annotation on the point cloud and then matching it to a corresponding image to achieve an annotation on the image; however, due to issues such as intrinsic and external parameter calibration and timestamp synchronization between the point cloud and the image, consistency between the image and the point cloud is poor, which affects accuracy of automatic annotation; and the limited annotation accuracy also limits annotation abilities of the three dimensional detection models.

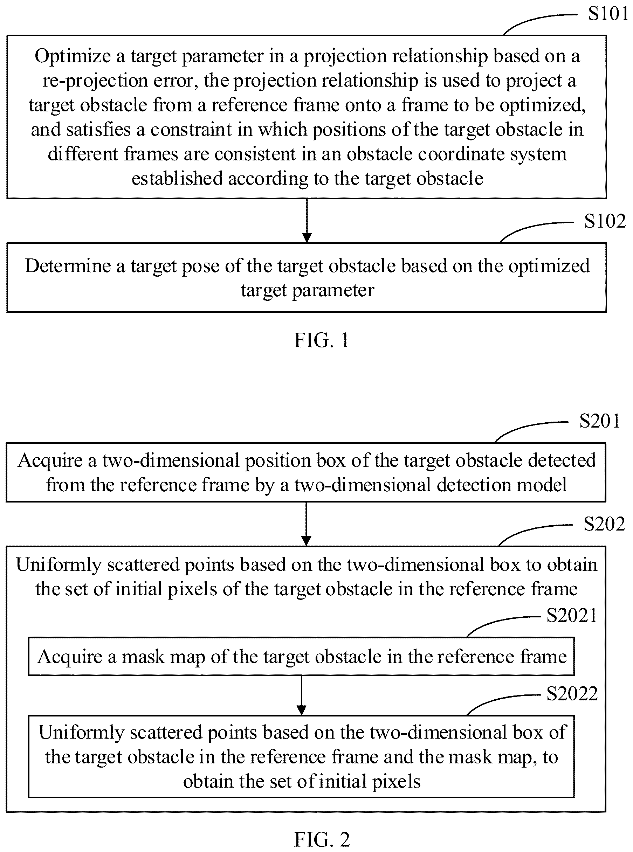

In view of this, an embodiment of the present disclosure provides a method for automatically annotate an obstacle. This method supports automatic detection of dynamic and static targets, which can improve the annotation sight distance. As shown in FIG. 1, it mainly includes the following contents:

In S101, a target parameter in a projection relationship is optimized based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle.

The reference frame and the frame to be optimized in the embodiment of the present disclosure each is a two-dimensional image, which maybe an image captured by a camera sensor. In the field of autonomous driving, it may be a bird's-eye view obtained by fusing images captured by a plurality of panoramic cameras of a vehicle.

The target obstacle may be a static target or a dynamic target.

The re-projection error is an indicator used in computer vision to measure a difference between a projected position of a three-dimensional point in a two-dimensional image and an actually observed feature point position. It is a core concept in a beam adjustment algorithm, and an optimized three-dimensional point may be made to approach an actual situation by minimizing the re-projection error.

The embodiment of the present disclosure makes the same target obstacle in different frame images has consistent positions after being projected from image coordinate systems of the different frame images to the obstacle coordinate system, by establishing the obstacle coordinate system. For example, in the field of autonomous driving, after converting an obstacle D from an A frame image to the obstacle coordinate system, a position coordinate P1 is obtained, and after converting the obstacle D from a B frame image to the obstacle coordinate system, a position coordinate P2 is obtained. Because the obstacle coordinate system is established by taking the obstacle D itself as a center, the P1 is equal to the P2.

During implementation, a world coordinate system is used as a medium to establish an association relationship among the image coordinate systems, a camera coordinate system, and the obstacle coordinate system, in order to model the projection relationship between the reference frame and the frame to be optimized. By optimizing the projection relationship to make the established projection relationship approximate an actual situation, a core parameter (i.e., the target parameter) used to determine a pose of an obstacle is ultimately obtained.

In the embodiment of the present disclosure, the target parameter in the projection relationship is optimized based on the re-projection error, so that the projection relationship established based on the optimized target parameter can accurately describe the projection relationship between the reference frame and the frame to be optimized.

In S102, a target pose of the target obstacle is determined based on the optimized target parameter.

The target pose of the target obstacle may include a center position, an angle, and a size of a three-dimensional position box of the target obstacle in three-dimensional space.

In the embodiment of the present disclosure, optimizing the target parameter in the projection relationship based on the re-projection error may make a projected result closer to a real situation, improve projection accuracy, and thus the target parameter that is in line with an actual situation is obtained. Then the target pose of the target obstacle is determined based on the optimized target parameter, thereby achieving automatic annotation of the pose of the target obstacle. During a whole process, for a point cloud, pose estimation of the target obstacle may be achieved by using a two-dimensional image acquired synchronously with the point cloud, without a need for intrinsic and external parameter calibration between the point cloud and the image, ensuring consistency of the obtained target pose between the point cloud and the image. Moreover, this method may achieve pose annotation of the target obstacle as long as there are the reference frame and the frame to be optimized. It is also applicable to a target with a very sparse point cloud, thereby improving the annotation sight distance for the static and dynamic targets.

In the embodiment of the present disclosure, as described above, the reference frame and the frame to be optimized may be the bird's-eye view in autonomous driving. For example, six panoramic cameras or seven panoramic cameras may be used to capture images of a surrounding environment of the vehicle, and then the images are fused into one bird's-eye view.

The bird's-eye view converts environmental information around the vehicle from a traditional front or side image to a top-down perspective. This perspective is particularly useful for understanding a spatial layout around the vehicle, detecting an obstacle, and planning a driving path.

In the field of autonomous driving, the reference frame refers to a frame of a BEV image selected as a reference within a certain period of time. The frame to be optimized refers to another frame of a BEV image that needs to be compared with the reference frame. The reference frame and the frame to be optimized are usually obtained from a continuous sequence of frames to be processed, representing an environmental state that changes over time.

In the embodiment of the present disclosure, the bird's-eye view is used as the reference frame and the frame to be optimized to satisfy a data requirement in autonomous driving technology and achieve automatic annotation of the bird's-eye view.

Of course, it may be understood that for a point cloud image collected by a radar sensor, a bird's-eye view captured synchronously with the point cloud may also be used to enhance an annotation ability of point cloud data, in order to overcome a problem of a sparse point cloud and inability to detect a target. Moreover, the method provided by the embodiment of the present disclosure may also be used to perform pose detection on the target obstacle on which detection is missed in the point cloud, in order to supplement the target pose of the target obstacle in a missed-detection frame.

In the embodiment of the present disclosure, quality of the reference frame affects optimization and iteration efficiency. During implementation, an image in which saliency of an object feature of the target obstacle satisfies a preset condition may be selected from the sequence of frames to be processed based on the object feature, as the reference frame. The object feature may refer to a feature that may describe a unique characteristic of the target obstacle, which is used to identify the target obstacle. The saliency of the object feature may be used to indicate a degree to which the object feature may accurately describe the target obstacle.

Each frame image in the sequence of frames to be processed is a two-dimensional image, a two-dimensional image detection model may detect the sequence of frames to be processed to obtain two-dimensional position box information of the target obstacle. The two-dimensional position box information includes a two-dimensional position box (i.e., a center point and a size), a category, detection confidence level, and other information of the target obstacle in a corresponding frame image.

Selecting the image in which the saliency satisfies the preset condition may be implemented as selecting an image with the highest detection confidence level of the target obstacle as the image satisfying the preset condition. Alternatively, an image with image quality higher than a quality threshold and detection confidence level higher than a confidence level threshold is be selected as the image satisfying the condition. Alternatively, an image with the largest size of the two-dimensional position box may be selected as the image satisfying the condition. It may be understood that during implementation, as long as the image that can stably and accurately describe the feature of the target obstacle is followed.

In the embodiment of the present disclosure, the image in which the saliency of the object feature satisfies the preset condition is selected as the reference frame based on the object feature of the target obstacle, so that an image with high-quality can be selected as the reference frame to provide a good data foundation for iterations of optimization of the projection relationship and improve speed and accuracy of the iterations of optimization.

The reference frame may be selected based on the saliency of the object feature with respect to both static and dynamic targets. During implementation, for the dynamic target, since a pose of the dynamic target may change, a frame closest to the frame to be optimized and containing the target obstacle may be preferentially selected as the reference frame. A requirement for feature saliency of the target obstacle may be appropriately lowered in the closest frame.

In the embodiment of the present disclosure, automatic annotation of the dynamic target is achieved by leveraging strong correlation in the pose between the closest frame and the frame to be optimized, thereby improving accuracy of the automatic annotation of the dynamic target.

During implementation, in a case where the target obstacle is the dynamic target, a frame image in which detection of the target obstacle is missed by the three-dimensional detection model may be acquired as the frame to be optimized; the three-dimensional detection model is used for performing target detection on a point cloud or a two-dimensional image to obtain the target pose of the target obstacle. Then, a suitable reference frame may be selected based on the frame to be optimized.

For example, in the case where the target obstacle is the dynamic target, due to an increase in the annotation sight distance, the point cloud appears relatively sparse or the image contains less information about the target obstacle, and existing three-dimensional detection models lack corresponding training data, which limits performance of the three-dimensional detection models and ultimately leads to missed detection of the dynamic target in some frames. At this point, in the embodiment of the present disclosure, a frame image in which the missed detection of the target obstacle occurs is determined as the frame to be optimized, in order to implement the method of automatically annotating an obstacle provided in the embodiment of the present disclosure for a missed-detection frame based on a detection result of the three-dimensional detection model, in order to continue processing and optimizing the missed-detection frame and improve an annotation ability for the dynamic target at a far sight distance.

For the static target, the reference frame may be selected first, and then the frame to be optimized is determined, which may be implemented as follows:

In step A1, an optimization direction is acquired;

In step A2, the frame to be optimized is selected from the sequence of frames to be processed based on the reference frame and the optimization direction.

The optimization direction marks whether to optimize from the reference frame forward or backward in the sequence of frames to be processed for achieving automatic annotation.

During implementation, starting from the reference frame, the saliency of the object feature of the target obstacle in frames before the reference frame and after the reference frame may be compared, and a direction with better saliency may be selected as the optimization direction. For example, if the saliency of the object feature in the frames before the reference frame is better than that in the frames after the reference frame, correspondingly, then the optimization direction is selected as starting from the reference frame and moving forwards. Otherwise, the optimization direction is selected as starting from the reference frame and moving backwards.

In addition, the frame to be optimized may be selected according to a default optimization direction starting from the reference frame and then is optimized. After several iterations of optimization, in a case where the re-projection error is difficult to be converged, an opposite direction of the default optimization direction may be selected as the optimization direction.

After determining the optimization direction, the frame to be optimized is selected from the sequence of frames to be processed based on the reference frame and the optimization direction. For example, the two-dimensional image detection model detects the target obstacle from a total of m frames behind the reference frame, one or more frames may be selected from these m frames as the frame to be optimized. Whether selecting one frame or more frames to be optimized, implementation of optimizing the target parameter based on the re-projection error is the same for each frame.

In the embodiment of the present disclosure, in a case where the target obstacle is the static target, selecting the frame to be optimized by acquiring the optimization direction and based on the reference frame can process those frames that need attention in a specific optimization direction in a targeted manner, thereby achieving automatic annotation of the target obstacle.

In some embodiments, due to the sequence of frames to be processed may be long, the number of frames that need to be processed each time is too high, resulting in a greater computational burden. Therefore, a timing length may be set to limit the number of frames to be optimized per processing, in order to improve overall efficiency of automatic annotation.

For example, the two-dimensional image detection model detects the n-th frame to the m-th frame, each of which contains the target obstacle, from a two-dimensional BEV image sequence, where m is greater than n and both m and n are positive integers. One frame with better feature saliency is selected from the n-th frame to the m-th frame as the reference frame. If (m-n) is large and all (m-n) frames are used as frame images that need to be processed, it will consume more computing resources. Therefore, the timing length may be set to ensure that the number of frames per processing on the target obstacle is within a reasonable range, in order to make reasonable use of the computing resources.

After determining the reference frame and the frame to be optimized, in order to facilitate optimization of the target parameter in the projection relationship, true values of projected points in the re-projection error may also be automatically determined, that is, a set of actual pixels the target obstacle in the frame to be optimized.

In the embodiment of the present disclosure, for the frame to be optimized, the true values of the projected points required for the re-projection error are determined based on a pixel-level trajectory tracking method.

For each pixel in a set of initial pixels of the target obstacle in the reference frame, a co-tracker (a tracking algorithm) may be used to track the pixel separately, in order to obtain trajectory points of the pixel in other frame images, and thus obtain trajectory information of each pixel. These trajectory points serve as the true values of the projected points on the corresponding frame to be optimized. For example, by tracking trajectories of the pixels, a set of trajectory points C1 of the target obstacle in a frame A to be optimized is obtained. Then, the C1 is used as the true values of the projected points of the frame A for determining the re-projection error in the future.

In the embodiment of the present disclosure, through a pixel-level trajectory tracking technology, the true values of the projected points required for re-projection error can be automatically determined, which may improve optimization efficiency and accuracy of the target parameter.

During implementation, there may be many pixels on the same target obstacle, but in order to improve the optimization efficiency of the target parameter, it is not necessary for every pixel to participate in an optimization process of the target parameter. Therefore, during implementation, the pixels of the target obstacle are sampled in the reference frame to obtain the initial pixels of the target obstacle in the reference frame. In this way, in the subsequent optimization process, some pixels may be omitted to improve the optimization efficiency. In the embodiment of the present disclosure, considering that the optimization needs the pixels of the target obstacle, a two-dimensional detection box acquired by the two-dimensional image detection model may continue to be used to determine the set of initial pixels of the target obstacle in the reference frame. The implementation method is shown in FIG. 2:

In step S201, a two-dimensional position box of the target obstacle detected from the reference frame by a two-dimensional detection model is acquired.

In step S202, points are uniformly scattered based on the two-dimensional box to obtain the set of initial pixels of the target obstacle in the reference frame.

In the embodiment of the present disclosure, a detection result of the two-dimensional image detection model for the target obstacle is reused to determine the set of initial pixels, which may improve the optimization efficiency.

In some embodiments, pixels within the two-dimensional position box may not necessarily belong to the target obstacle. Therefore, in order to further improve the optimization accuracy of the target parameter, in the embodiment of the present disclosure may be implemented as:

In step S2021, a mask map of the target obstacle in the reference frame is acquired.

In step S2022, points are uniformly scattered based on the two-dimensional box of the target obstacle in the reference frame and the mask map, to obtain the set of initial pixels.

The mask map of the target obstacle is obtained by segmenting the target obstacle from the reference frame.

During implementation, a SAM (segment-anything model) may be used to process the reference frame to obtain the mask map of the target obstacle. By using the segment-anything model to process the reference frame, it is possible to flexibly, efficiently, and accurately generate a high-quality segmentation mask, thereby improving quality of the initial pixels and ultimately improving annotation accuracy of the target obstacle.

In the case of uniformly scattering points based on the two-dimensional position box and mask map of the target obstacle in the reference frame, since not all pixels in the two-dimensional position box are on the target obstacle, the mask map is used to further limit the range of scattering points, thereby ensuring that each pixel in the initial set of pixel points belongs to the target obstacle. Among them, the two-dimensional position box can provide the approximate position and range of the initial pixel points of the target obstacle, improving the efficiency of point scattering. The mask map can provide a fine boundary of the initial pixel points of the target obstacle. When used together, the initial pixel point set has a higher confidence level in belonging to the target obstacle, ensuring that all tracked pixels belong to the target obstacle and improving the accuracy of the initial pixel points, thereby enhancing the optimization accuracy of the target parameters and the annotation accuracy of the target obstacle.

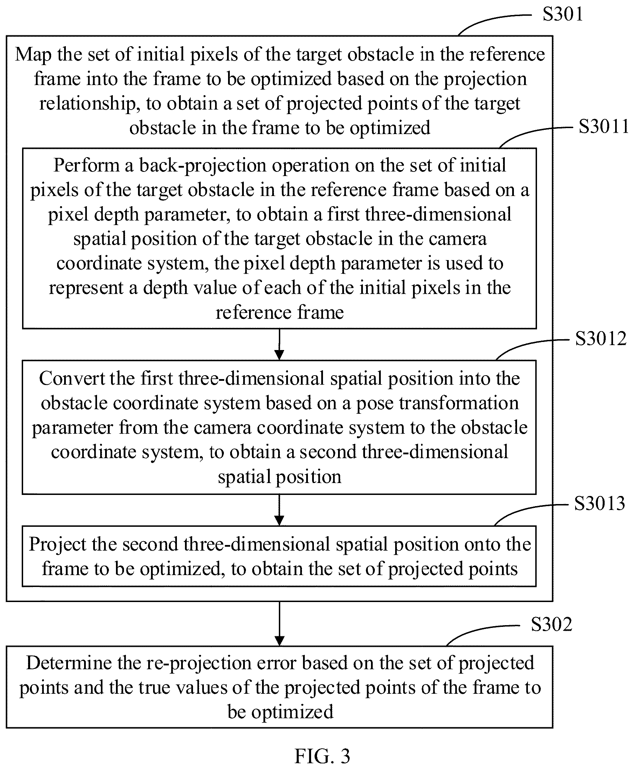

In some embodiments, implementation of determining the re-projection error may be as shown in FIG. 3, including:

In step S301, the set of initial pixels of the target obstacle in the reference frame is mapped into the frame to be optimized based on the projection relationship, to obtain a set of projected points of the target obstacle in the frame to be optimized.

In the embodiment of the present disclosure, projecting the target obstacle into the frame to be optimized may be implemented as steps as shown in FIG. 3:

In step S3011, a back-projection operation is performed on the set of initial pixels of the target obstacle in the reference frame based on a pixel depth parameter, to obtain a first three-dimensional spatial position of the target obstacle in the camera coordinate system, the pixel depth parameter is used to represent a depth value of each of the initial pixels in the reference frame.

A process of the back-projection operation is shown in formula (1):

$$pts_{3d\_camera} = H(K^{-1} * pts_{2d_{init}}) * pts_{depth} \qquad (1)$$

In the formula (1), $pts_{3d\_camera}$ is the obtained first three-dimensional spatial position of the target obstacle in the camera coordinate system, $H$ is a homogenization operation, $K$ is a camera intrinsic parameter, $pts_{2d_{init}}$ is the set of initial pixles of the target obstacle in the reference frame, $pts_{depth}$ is the pixel depth parameter.

The pixel depth parameter may be determined through the iterations of optimization, so that providing an initial value for it is sufficient.

During implementation, in order to improve the optimization efficiency of the target parameter, a first preset value of pixel depth parameter may be acquired; and random perturbation is performed on the first preset value to obtain the initial value of the pixel depth parameter.

In some possible implementations, the first preset value of the pixel depth parameter may be acquired based on prior knowledge, and then random noise may be added to the first preset value to achieve random perturbation, such as adding Gaussian noise on the first preset value, or adding uniformly distributed noise to the first preset value within a certain range to obtain the initial value of the pixel depth parameter.

In other possible implementations, a depth value of the target obstacle in any frame image detected from the three-dimensional detection model may also be used as the first preset value. A depth value in a frame image close to the reference frame may be preferentially selected, in order to make the initial pixel depth parameter closer to an actual situation of the reference frame, thereby improving convergence speed.

In the embodiment of the present disclosure, by performing random perturbation on the initial value of pixel depth parameter, diverse initial values may be generated, enabling the initial value of pixel depth parameter to better adapt to different frames to be optimized. It can avoid a problem of getting stuck in a specific local pattern when the initial value is fixed. Moreover, the initial value after random perturbation may enable the optimization process to proceed in different initial states, which can improve a generalization ability of the method of automatically annotating an obstacle provided in the embodiment of the present disclose.

In step S3012, the first three-dimensional spatial position is converted into the obstacle coordinate system based on a pose transformation parameter from the camera coordinate system to the obstacle coordinate system, to obtain a second three-dimensional spatial position.

That is, the first three-dimensional spatial position of the target obstacle in the camera coordinate system is converted from the camera coordinate system of the reference frame to the obstacle coordinate system by using the pose transformation parameter, this process is shown in formula (2):

$$pts_{3d\_object} = T_{c_i2o} * pts_{3d\_camera} \qquad (2)$$

In the formula (2), $pts_{3d\_object}$ is the second three-dimensional spatial position in the obstacle coordinate system, $pts_{3d\_camera}$ is the first three-dimensional spatial position of the target obstacle in the camera coordinate system, $T_{c_i2o}$ is the pose transformation parameter from the camera coordinate system to the obstacle coordinate system.

In the embodiment of the present disclosure, for the static target, since the target obstacle is stationary, $T_{c_i2o}$ is a constant, and for the dynamic target, since the target obstacle is moving, $T_{c_i2o}$ has its own corresponding value in each frame to be optimized.

It may also be understood that in the case where the target obstacle is the static target, the target parameter that needs to be optimized in the projection relationship includes the pixel depth parameter.

Since the pose transformation parameter is a constant, there is no need to recalculate or adjust the pose transformation parameter during the optimization process, which allows the optimization process to focus only on the pixel depth parameter, thereby reducing computational complexity and required time, and significantly improving optimization efficiency of a static object.

Similarly, in the case where the target obstacle is the dynamic target, the pose transformation parameter is not fixed because the target obstacle is moving. Correspondingly, the target parameter that needs to be optimized in the projection relationship includes the pixel depth parameter and the pose transformation parameter. For the dynamic target, by optimizing the pixel depth parameter and the pose transformation parameter, a key parameter required to determine the pose of target obstacle may be accurately obtained to improve the annotation sight distance of the dynamic target.

Since the pose transformation parameter needs to be determined by iterations of optimization for the dynamic target, it is also necessary to provide an initial value for it.

During implementation, the initial value of the pose transformation parameter may be obtained by acquiring a second preset value of pose transformation parameter, and performing random perturbation the second preset value.

The second preset value is an initial setting for the pose transformation parameter, which may be obtained through some prior knowledge, experience, or preliminary analysis in a specific task scenario. Afterwards, random perturbation is performed on the second preset value to obtain the initial value of the pose transformation parameter.

In some embodiments, the initial setting of the pose transformation parameter may be determined by formula (3):

$$T_{o2c}^0 = T_{w2c}^0 T_{o2w}^0; \quad T_{c2o} = \left(T_{o2c}^0\right)^{-1} \qquad (3)$$

In the formula (3), $T_{o2c}^0$ is an initial setting of a pose transformation relationship between the obstacle coordinate system and the camera coordinate system at a timepoint of the reference frame, which is an inverse matrix of the pose transformation parameter between the camera coordinate system and the obstacle coordinate system, and thus $T_{o2c}^0$ may be used as the second preset value of the pose transformation parameter that needs to be optimized, after being optimized, the pose transformation parameter may be obtained by calculating its inverse matrix; $T_{w2c}^0$ is a position transformation relationship between the world coordinate system and the camera coordinate system at the timepoint of the reference frame; $T_{o2w}^0$ is a pose of the obstacle coordinate system relative to the world coordinate system at the timepoint of the reference frame.

In the embodiment of the present disclosure, the initial value of the pose transformation parameter obtained by performing random perturbation on the second preset value may adapt to different frames to be optimized, thereby avoiding a problem of getting stuck in a specific local pattern when the initial value is fixed. Moreover, the initial value after random perturbation may enable the optimization process to proceed in different initial states, which can improve the generalization ability of the method of automatically annotating an obstacle provided in the embodiment of the present disclose.

In step S3013, the second three-dimensional spatial position is projected onto the frame to be optimized, to obtain the set of projected points.

Based on the previous explanations, in the obstacle coordinate system established according to the target obstacle, the positions of the target obstacle in different frames are consistent. Using the camera intrinsic parameter K to perform a projection operation at any i-th frame (i.e., any frame to be optimized), to obtain the set of projected points of the target obstacle at the i-th frame (i.e., the frame to be optimized). The specific implementation method may be achieved through formula (4):

$$pts_{2d_{proj}} = K * (pts_{3d_{object}} * T_{c_i2o}) \qquad (4)$$

In the formula (4), $pts_{2d_{proj}}$ is the obtained set of projected points, K is the camera intrinsic parameter, $pts_{3d_{object}}$ is the second three-dimensional spatial position of the target obstacle in the obstacle coordinate system, $T_{ci2o}$ is the pose transformation parameter from the camera coordinate system to the obstacle coordinate system of the frame to be optimized.

In the embodiment of the present disclosure, the set of projected points of the reference frame in the frame to be optimized may be more accurately obtained through the back-projection and projection operations.

In step S302, the re-projection error is determined based on the set of projected points and the true values of the projected points of the frame to be optimized.

The method of acquiring the true values of the projected points has been explained earlier, and will not be repeated here. The re-projection error may be shown as formula (5):

$$loss_{proj} = Huber(pts_{2d_{proj}}, pts_{2d\_gt}) \qquad (5)$$

In the formula (5), $loss_{proj}$ represents the re-projection error, *Huber* is a loss function that combines advantages of a mean square error (MSE) and an absolute error (MAE), $pts_{2d_{proj}}$ is the set of projected points of the target obstacle in the frame to be optimized, and $pts_{2d\_gt}$ is the true values of the projected points of the target obstacle in the frame to be optimized.

In the embodiment of the present disclosure, accuracy and reliability of the projection relationship established based on the current target parameter may be evaluated by comparing a difference between the set of projected points and the true values of the projected points. In a case where the re-projection error is small, it indicates that a projection effect reflects a real situation well, which helps to improve the optimization accuracy of the target parameter and thus improve accuracy of automatically annotating the pose of the target obstacle.

In the embodiment of the present disclosure, considering that the depth parameter $pts_{depth}$ of the pixel may not converge easily, a depth regularization term may be added to ensure normal convergence of a loss.

The depth regularization term is used to reduce dispersion degree of depth of each pixel of the target obstacle. This solves a problem of inaccurate depth estimation of each pixel caused by large degree of dispersion in the depth of each pixel of the target obstacle. The depth regularization term is shown in formula (6):

$$loss_{norm} = \sum_{i=1}^{N} ||pts_{depth\_i} - mean(pts_{depth})||_1 \qquad (6)$$

In the formula (6), $loss_{norm}$ is a loss of the depth regularization term, $pts_{depth\_i}$ is a depth value of the i-th pixel in the current pixel depth parameter $pts_{depth}$, $mean(pts_{depth})$ is a mean value of current depth values of all initial pixels on the target obstacle.

For example, after n iterations of optimization are completed, depth values obtained after the n iterations of optimization are used to determine the loss of the depth regularization term for performing the (n+1)-th iteration of optimization of the target parameter, where n is a positive integer.

Afterwards, a total projection loss may be determined based on the re-projection error and the depth regularization term of the projected points; and the target parameter in the projection relationship is optimized based on the total projection loss. The total projection loss is shown in formula (7):

$$loss = w_1 * loss_{proj} + w_2 * loss_{norm} \qquad (7)$$

In the formula (7), *loss* is the total projection loss, $loss_{proj}$ represents the re-projection error, $w_1$ is a weight coefficient corresponding to the re-projection error, $loss_{norm}$ is the depth regularization term, and $w_2$ is a weight coefficient corresponding to the depth regularization term.

In the embodiment of the present disclosure, the re-projection error may measure a positional difference between projected pixels and actual points (the true values), while the depth regularization term considers rationality of pixel depth information. By combining the re-projection error and the depth regularization term to determine the total projection loss, projection quality may be evaluated more comprehensively and the convergence speed may be improved.

Overall, for convenience of implementation, the obstacle coordinate system of the target obstacle may be established based on the world coordinate system.

The world coordinate system is a globally fixed coordinate system used to describe positions and poses of all objects in the entire environment. The obstacle coordinate system is a local coordinate system centered on the target obstacle, used to describe a pose change of the target obstacle itself. The obstacle coordinate system is established based on the world coordinate system, which may be established by moving the origin of the world coordinate system to the position of the obstacle in the world coordinate system.

For the static target, the pose transformation parameter of the target obstacle from the camera coordinate system to the obstacle coordinate system of each frame to be optimized is fixed and invariant. That is, under a normal situation, the target obstacle remains unchanged in the world coordinate system.

But for the dynamic target, due to its mobility, it usually changes in the world coordinate system. Therefore, the initial value of pose transformation parameter may be superimposed with a transition term. The transfer term is used to express a relative change of the target obstacle from the reference frame to the frame to be optimized, and the pose transformation parameter is optimized by optimizing the transition term.

That is, the initial value of the pose transformation parameter establishes a relationship between the dynamic target and the world coordinate system, but this relationship will change with movement of the dynamic target. Therefore, in the embodiment of the present disclosure, this change may be expressed in the transfer term for optimization. When optimizing the pose transformation parameter, only a parameter in the transition term needs to be optimized. For the i-th frame, which is the frame to be optimized, the relationship between the obstacle coordinate system and the camera coordinate system is shown in formula (8):

$$T_{o2c}^i = T_{w2c}^i T_{o2w}^i \qquad (8)$$

In the formula (8), $T_{o2c}^i$ is an inverse matrix of the pose transformation parameter corresponding to the i-th frame, which is the frame to be optimized, $T_{w2c}^i$ is a pose transformation from the world coordinate system of the target obstacle to the camera coordinate system at a timepoint of the i-th frame, $T_{o2w}^i$ is a pose transformation (i.e., the transition term) of the obstacle coordinate system relative to the world coordinate system at the time point of the i-th frame, which may be determined by a pose of the i-th frame. Finally, based on a result of the formula (3) at the timepoint of the reference time, an inverse matrix of the position transformation parameter superimposed the transition term may be initialized as expression (9):

$$\begin{matrix} R_{00} & R_{01} & R_{02} & V_x * \Delta t \\ R_{10} & R_{11} & R_{12} & V_y * \Delta t \\ R_{20} & R_{21} & R_{22} & V_z * \Delta t \\ 0 & 0 & 0 & 1 \end{matrix} \qquad (9)$$

$\begin{matrix} R_{00} & R_{01} & R_{02} \\ R_{10} & R_{11} & R_{12} \\ R_{20} & R_{21} & R_{22} \end{matrix}$ represents a rotation, and may be determined by $T_{o2c}^0$ in the formula (3).

$V_x$ represents a velocity component of the target obstacle in a x direction, $V_y$ represents a velocity component of the target obstacle in a y direction; $V_z$ represents a velocity component of the target obstacle in a z direction, (0 0 0 1) represents a homogenization operation, and $\Delta t$ represents a time difference between the frame to be optimized and the reference frame.

It may be understood that after optimizing the pose transformation relationship corresponding to the formula (9), solving its inverse matrix may obtain the optimized position transformation parameter.

In the embodiment of the present disclosure, the obstacle coordinate system is established based on the world coordinate system, which can more conveniently describe and track the movement of the dynamic target. By superimposing the transition term on the initial value of the pose transformation parameter, it is possible to flexibly and conveniently describe a movement change of the dynamic target between different frames, thereby improving the efficiency of automatic annotation.

In the embodiment of the present disclosure, for the static target, a detection result obtained by performing target detection on the sequence of frames to be processed by the two-dimensional image detection model may be acquired, and a candidate object belonging to a target category is selected as the target obstacle based on the detection result.

The two-dimensional image detection model is typically based on deep learning technology, such as a convolutional neural network (CNN). The CNN has an ability to automatically extract image features. By combining convolutional layers, pooling layers, and fully connected layers, the CNN may learn and classify various targets in input images. During implementation, the Yolo model may be used as the two-dimensional image detection model.

For each frame image in the sequence of frames to be processed, the two-dimensional image detection model performs independent processing and outputs a position of each detected candidate object in the image, the position is represented in a form of the two-dimensional position box. The two-dimensional position box information may include parameters such as a center point, a size, a category, detection confidence level, a tracking ID (Identification), and the like. Afterwards, based on the detection result, the candidate object belonging to the target category may be selected as the target obstacle. For example, some obstacles that are too small in size are filtered out, and a static target that cannot be accurately detected by the conventional 3D detection model from remaining candidate objects or a static target of a new category is taken as the target obstacle in the embodiment of the present disclosure. Specifically, such as a low-rise stone pillar, a lamp post, and the like.

In the embodiment of the present disclosure, acquiring the detection result obtained by performing the target detection on the sequence of frames to be processed by the two-dimensional image detection model can efficiently and accurately obtain a static object category that needs to be annotated, thereby facilitating automatic detection of such static target in this category by optimizing the target parameter in the projection relationship. This method, combined with the three-dimensional detection model, can effectively improve detection efficiency of the target obstacle. In the field of autonomous driving, it is possible to improve the annotation sight distance, increase static target types that may be automatically annotated, and overcome shortcomings of the three-detection detection model that cannot automatically annotate sparse or low-rise obstacles.

In some embodiments, in the case where the the target obstacle is the dynamic target, the target pose of the target obstacle is determined based on the pose transformation parameter in the optimized target parameter, the camera intrinsic parameter, and the three-dimensional position box of the target obstacle in the reference frame, which is shown in formula (10):

$$obj_i = \left(obj_{init} * T_{c_i2o}\right) * T_{o2c_i} \qquad (10)$$

In the formula (10), $obj_i$ is the target pose of the frame to be optimized, $obj_{init}$ is the three-dimensional frame detected based on the three-dimensional detection model from the reference frame, $T_{c_i2o}$ is the optimized pose transformation parameter, and $T_{o2c_i}$ is obtained by performing the inverse operation on the optimized $T_{c_i2o}$.

In the embodiment of the present disclosure, the target pose of the target obstacle in the frame to be optimized may be estimated by the three-dimensional position frame of the reference frame. With respect to a case where the sight distance of the frame to be optimized is far and the point cloud is sparse, the annotation sight distance and annotation effect for the dynamic target may be improved.

Correspondingly, in the case where the target obstacle is the static target, the initial pixels of the target obstacle in the reference frame are converted into the camera coordinate system based on the optimized target parameter, to obtain a first point group of the target obstacle in the camera coordinate system; and the first point group is processed by using a planar estimation method, to obtain the target pose of the target obstacle in the reference frame.

Determining the target pose of the target obstacle by using the planar estimation method may be implemented by first performing a denoising operation on the first point group of the target obstacle in the camera coordinate system to remove noises in the first point group and obtain a first set of intermediate points. The denoising operation may remove outliers and optimize quality of the first point group. Then, for the first set of intermediate points, the random sampling consensus (RANSAC) algorithm may be used to estimate inliers, planes, and normal vectors of the first set of intermediate points, thereby estimating a center point, an angle, and a size of the static target to obtain its target pose in the reference frame.

In the embodiment of the present disclosure, for the static target, the target pose of the target obstacle in the reference frame may be determined through plane estimation to achieve automatic annotation of the static target.

In order to further improve detection efficiency of the target obstacle in other frames, target poses of the target obstacle in other frames may also be obtained based on a global back-projection strategy. Specifically, it can be implemented as follows:

The target pose of the target obstacle in the reference frame is converted to a pose of the target obstacle in a target frame by using the global back-projection strategy.

The target frame is the frame to be optimized or an image frame that requires estimating the pose of the target obstacle other than the frame to be optimized.

That is, positions of all points of the target obstacle in the three-dimensional space are optimized through the aforementioned object-based beam adjustment method, and a size, an orientation, and a position of the target obstacle are estimated by using plane estimation. Then, through pose transformation, such as transformation from the world coordinate system to the camera coordinate system, the pose of the target obstacle in each target frame is obtained.

In the target frame, the size and the position of the target obstacle may be directly obtained from the world coordinate system, while the orientation may be determined by a camera pose.

In the embodiment of the present disclosure, for a static target having a far sight distance, improvement of the sight distance may be achieved through the global back-projection strategy.

In some embodiments, after obtaining the target pose of the target obstacle in each frame image, a trajectory of the target obstacle may be tracked based on target poses of the target obstacle in different frame images to obtain trajectory information of the target obstacle.

The method for automatically annotating an obstacle provided in the embodiment of the present disclosure may serve as an auxiliary tool for the three-dimensional detection model. Therefore, during implementation, the target pose may be obtained separately using the three-dimensional detection model, and for a target obstacle that cannot be detected by the three-dimensional detection model, automatic annotation may be achieved by using the method provided in the embodiment of the present disclosure. Regardless of the method, the target pose of the target obstacle will be obtained. Results of the two methods are summarized to obtain the target pose of the target obstacle at all timepoints. Afterwards, the trajectory of the target obstacle is tracked in the world coordinate system based on target tracking technology and Kalman filtering technology, to associate front and rear frame images where the target obstacle is located, and obtain the trajectory information of the target obstacle.

Kalman filtering may predict the position and velocity of the target obstacle and make a correction based on observed data. This is very effective in dealing with occlusion or noise interference, and can improve accuracy of tracking.

In target tracking, Kalman filtering is used to model a moving trajectory of the target obstacle. By modeling the movement of the target obstacle, Kalman filtering may predict a position of the target obstacle in real time at a next moment.

In summary, Kalman filtering is a very important tool in the field of target tracking, which significantly improves performance and robustness of target tracking by providing accurate state prediction and correction.

In the embodiment of the present disclosure, by tracking the trajectory of the target obstacle, the trajectory of the target obstacle at different frame times may be analyzed in depth, thereby providing data basis for subsequent use.

In the embodiment of the present disclosure, after obtaining the trajectory information of the target obstacle, a two-dimensional detection result may be associated with a three-dimensional detection result, mainly for correcting a category of the three-dimensional detection model. For example, three-dimensional position boxes of some frames in the trajectory information are detected based on the three-dimensional detection model, and their categories may have errors. During implementation, for a frame to be corrected in the trajectory information, a three-dimensional position box of the target obstacle in the frame to be corrected is determined based on a two-dimensional position box of the target obstacle in the frame to be corrected, the two-dimensional position box is obtained by detecting the target obstacle by the two-dimensional image detection model; a classification result of the three-dimensional position box of the frame to be corrected is corrected based on a classification result of the two-dimensional position box.

The three-dimensional position box of the frame to be corrected is a result detected by the three-dimensional detection model. If classification accuracy of the three-dimensional detection model is lower than that of the two-dimensional image detection model, there may be errors in its classification. Therefore, for the target obstacle in the same frame to be corrected, the two-dimensional position box obtained by the two-dimensional image detection model may be compared with the three-dimensional position box obtained by the three-dimensional detection model to obtain the Intersection over Union (IoU) of the two-dimensional position box and the three-dimensional position box. If the IoU meets a preset condition, it is confirmed that the three-dimensional position box corresponding to the two-dimensional position box in the same frame to be corrected belongs to the same target obstacle.

Afterwards, a classification category of the two-dimensional position box may be associated with a classification category of the three-dimensional position box to obtain category information for consistent trajectory generation. That is, in a case where a detection category of the three-dimensional position box is inconsistent with a detection category of the two-dimensional position box, the classification result of the three-dimensional position box is corrected based on the classification result of the two-dimensional position box. It may be implemented as obtaining categories of two-dimensional position boxes of the target obstacle in different frame images, and selecting a category having a classification confidence level greater than a confidence level threshold as a final category of the target obstacle. If there is a plurality of categories each having the classification confidence level greater than the confidence level threshold, a category with the highest average classification confidence level will be prioritized as the final category.

If the category of the three-dimensional position box is inconsistent with the final category, the category of the three-dimensional position box may be corrected to the final category.

In the embodiment, the classification result of three-dimensional position box in the frame to be corrected is corrected based on the classification result of two-dimensional position box. When the two-dimensional and three-dimensional detection results are inconsistent, the two-dimensional detection result may be used to correct the three-dimensional detection result, thereby improving accuracy of target obstacle detection.

In the embodiment of the present disclosure, false detection may also be filtered by determining a confidence level of trajectory information. The confidence level is determined based on at least one of the confidence level of the two-dimensional position box of the target obstacle identified by the two-dimensional image detection model, an occlusion rate of the target obstacle, or the IoU between the two-dimensional position box and the three-dimensional position box of the target obstacle; and the trajectory information is determined as a false detected trajectory in a case where the confidence level is less than a target threshold.

The confidence level of the two-dimensional position box of the target obstacle recognized by the two-dimensional image detection model is an evaluation index of accuracy of the two-dimensional position box detected by the two-dimensional image detection model.

The occlusion rate of the target obstacle represents a degree to which the target obstacle is obstructed by other objects in each frame. During implementation, an occlusion situation in the current frame may be determined by combining a historical trajectory of the target obstacle.

The IoU is an IoU between the two-dimensional position box detected by the two-dimensional image detection model and the three-dimensional box detected by the three-dimensional detection model for the target obstacle mentioned above.

During implementation, the confidence level of the trajectory information of the target obstacle may be calculated by using a weighted average method. A weight coefficient of each type of information may be adjusted according to actual needs.

If the confidence level of the trajectory information is greater than the set threshold, it is considered as a valid trajectory. Otherwise, it may be the false detected trajectory. The false detected trajectory is filtered out, and the valid trajectory is remained.

In the embodiment of the present disclosure, the confidence level of the trajectory information is determined based on at least one of the confidence level of the two-dimensional position box, the occlusion rate, or the IoU, when these multiple types of information are fused, reliability of object detection can be evaluated from multiple perspectives, resulting in a higher confidence level of the trajectory. Taking into account these factors comprehensively may more accurately locate a real target obstacle and avoid treating a false detected target obstacle as the real target obstacle.

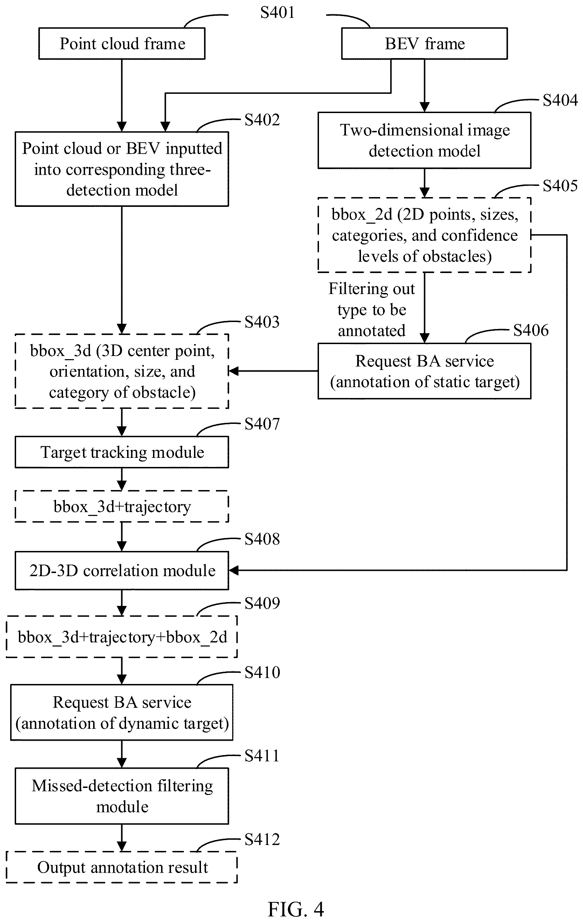

In summary, taking the field of autonomous driving as an example, the method for automatically annotating an obstacle provided in the embodiment of the present disclosure may improve the sight distance of annotating the obstacle, as shown in FIG. 4:

In step S401, a point cloud frame or BEV frame is acquired.

In step S402, the acquired point cloud frame or BEV frame is input into a corresponding three-detection model.

The point cloud frame adopts a three-dimensional detection model corresponding to a point cloud, such as DSVT (Dynamic Sparse Voxel Transformer). A two-dimensional BEV adopts a three-dimensional detection model corresponding to the two-dimensional BEV, such as PETR (Position Embedding Transformation and Refinement).

In step S403, an initial three-dimensional box bbox_3d of the target obstacle is outputted from the three-dimensional detection model, including information such as a three-dimensional center point, an orientation, a size, and a category of the obstacle.

In step S404, the BEV frame is inputted into a two-dimensional image detection model.

In step S405, two-dimensional boxes (bbox_2d) of candidate obstacles are outputted from the two-dimensional image detection model, including information such as two-dimensional center points, sizes, categories, and confidence levels of the obstacles.

In step S406, obstacles whose two-dimensional boxes have a size smaller than a preset size are filtered out from the candidate obstacles, and the static target of the target category is selected from the remaining candidate obstacles as the target obstacle to request a BA service to optimize the target parameter in the projection relationship, achieving transformation from bbox_2d to bbox_3d.

That is, the target pose of the target obstacle in the reference frame may be obtained through the optimization process of the projection relationship described by the aforementioned formulas, and the target poses of the target obstacle in other frames may be obtained through the global back-projection strategy.

In step S407, after obtaining bbox_3d of all frames, the target tracking module may use Kalman filtering and target tracking technology to correlate the target obstacle in different frames, thereby obtaining the trajectory information of the target obstacle.

In step S408, the category of target obstacle in bbox_3d is corrected based on correlation between two-dimensional and three-dimensional detection results, to obtain the category information for consistent trajectory generation.

Besides, not only may the static target achieve automatic annotation and improvement of the sight distance, but the embodiment of the present disclosure can also improve the annotation sight distance of the dynamic target.

For example, in step S409, a missed-detection frame in which the 3D detection model misses detection of the dynamic target in the point cloud frame or BEV frame may be determined, and the missed-detection frame is taken as the frame to be optimized. For example, it may be determined whether there is a missed detection based on continuous detection of the three-dimensional position box of the same target obstacle.

If it is a missed detection of the point cloud frame, the BEV frame collected synchronously with the point cloud frame may be obtained to achieve improvement of the sight distance for the dynamic target. If it is a missed detection of the BEV frame, the improvement of the sight distance for the dynamic target may be achieved on the basis of the BEV frame. Specifically, for the missed-direction frame, the most recent BEV frame from which the pose is detected by the three-dimensional detection model may be selected as the reference frame, then the BA service is requested to be called for optimization based on the trajectory information of the initial pixels in the reference frame and the two-dimensional position box.

In step S410, the BA service is requested to optimize the projection relationship based on the reference frame to obtain the optimized pose transformation parameter and the pixel depth parameter, and then the target pose of the dynamic target in the frame to be optimized is obtained based on the position transformation parameter.

In step S411, the false detected trajectory information is filtered out based on a missed-detection filtering module.

In step S412, an annotation result is outputted.

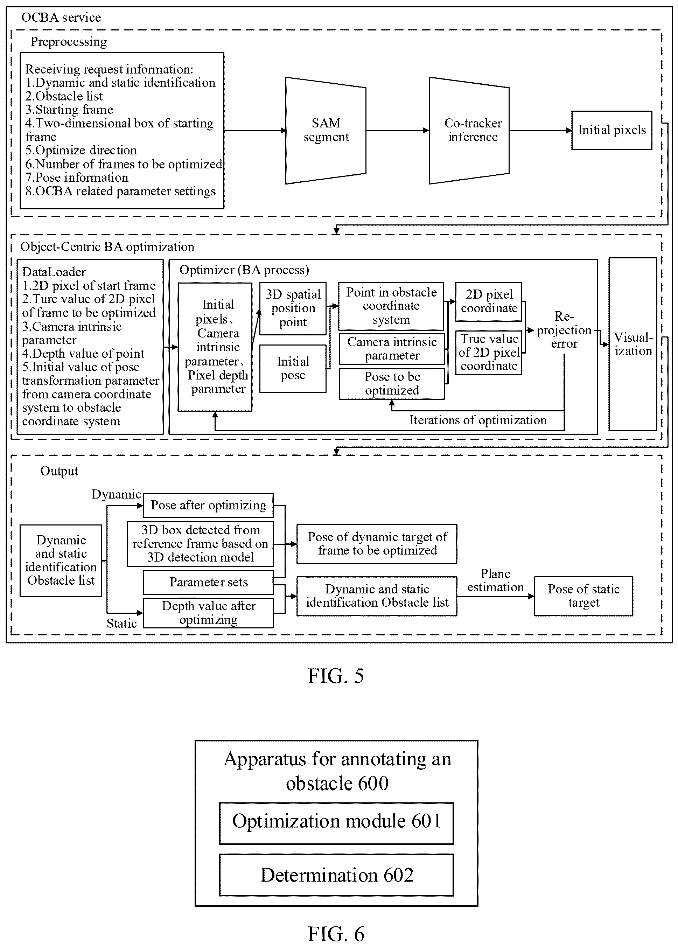

Overall, a BA service optimization process is shown in FIG. 5, which includes a preprocessing module, an optimization module, and an output module.

The preprocessing module may perform preprocessing on a received request to obtain following request information, which mainly includes 8 types:

(1) A dynamic and static identification, which used to indicate whether the request is for the dynamic target or the stationary target. This identification affects an optimization process of OCBA, that is, whether the optimized target parameter includes the pose transformation parameter;

(2) An obstacle list, which is represented in a form of obstacle trajectory IDs, the list serves as a key to correspond one-to-one with subsequent information. During implementation, a plurality of target obstacles may be requested to be annotated, and this list stores the obstacles that need to be automatically annotated.

(3) A starting frame (i.e., the reference frame), which marks which frame each obstacle starts being optimized from. During implementation, a frame with a significant feature is selected as the reference frame for the target obstacle;

(4) A two-dimensional box of the starting frame, which marks the two-dimensional position box of the target obstacle in the starting frame;

(5) An optimize direction, which marks whether the target obstacle is optimized forward or backward;

(6) The number of frames to be optimized, which marks how many frames of the target obstacle are involved in the optimization process;

(7) Pose information, which includes a pose transformation matrix from the coordinate system camera to the world coordinate system, a transformation matrix from a camera to a radar, and the like;

(8) OCBA related parameter settings, such as a timing length, a depth noise variance, a matrix variance, and the like.

As described above, the timing length is used to reduce occupation of resources, and the timing length is less than or equal to the number of frames to be optimized. The depth noise variance is used to perform random perturbation on the initial value of the pixel depth. The depth noise variance may include a mean value and a variance of a Gaussian distribution, in order to randomly sample and generate noise from the Gaussian distribution to perform random perturbation on the depth parameter of the pixel. Matrix variance is used to perform random perturbation on the pose transformation parameter.

After obtaining the reference frame in the sequence to be processed, the target obstacle is segmented by using the SAM model to obtain the mask map of the target obstacle. Then, points are uniformly scattered based on the two-dimensional box and the mask map of the target obstacle, to obtain the initial pixels of the target obstacle.

Next, based on the initial pixels of the target obstacle, the co-tracker is used to track these pixels, thereby obtaining a series of trajectory information of the initial pixels in each frame to be optimized. The trajectories of these tracked pixels are used as a truth value of a pixel in the frame to be optimized of OCBA to optimize the relevant target parameter.

The optimization module includes a DataLoader, an OCBA Optimizer, and a Visualizer. The DataLoader provides data for each optimization, and after the optimization is completed, visualization is used for effect verification.

The DataLoader provides a pixel position $pts_{2d\_init}$ of a two-dimensional pixel in the reference frame, a true value $pts_{2d\_gt}$ of the two-dimensional pixel in the frame to be optimized, the camera intrinsic parameter K, the initial value $pts_{depth}$ of the pixel depth parameter, and the initial value $T_{c2o}$ of the pose transformation parameter from the camera coordinate system to the obstacle coordinate system.

The optimization of the Optimizer is a continuous iterative optimization process. Firstly, the initial pixel point $pts_{2d\_init}$, the camera intrinsic parameter K, and the pixel depth parameter $pts_{depth}$ are used for perform back-projection operation to obtain a back-projection result $pts_{3d\_camera}$, which is a corresponding three-dimensional spatial position point of the initial two-dimensional pixel of the target obstacle in the reference frame in the camera coordinate system.

Next, the three-dimensional spatial position point is converted from the camera coordinate system of the reference frame to a point $pts_{3d\_object}$ in the obstacle coordinate system by using $T_{c02o}$. Since the point of the obstacle in the obstacle coordinate is consistent, the point may be directly converted from an object coordinate system to a point in the camera coordinate system of any i-th frame by using $T_{ci2o}$. Meanwhile, utilizing the intrinsic parameter K to perform an projection operation at any i-th frame, in order to obtain a two-dimensional pixel coordinate of the obstacle at the i-th frame. A two-dimensional pixel position $pts_{2dproj}$ of each pixel of the initial frame in other frames is obtained through OCBA.

Furthermore, the re-projection error is used to optimize this process, while considering that $pts_{depth}$ is difficult to converge, the deep regularization term is added to ensure normal convergence of the loss.

In the end, the entire OCBA optimization process is achieved through loss backpropagation and gradient descent update, resulting in the optimized $pts_{depth}$ and $T_{c2o}$.

The Visualizer in FIG. 5 may more intuitively display the optimized annotation result, such as display the automatically annotated bbox_3d in a two-dimensional image of a low-rise stone pillar.

In the output module, for the static target, a back-projection result $pts_{3d\_camera}$ may be obtained by the optimized $pts_{depth}$ and parameters sets such as $pts_{2d\_init}$, $K$, $T_{c2o}$ and the like. Then, based on plane estimation, the target pose of the static target obstacle may be obtained. During implementation, the corresponding pixel depth parameters $pts_{depth}$ for all two-dimensional pixels of the target obstacle may be obtained. Through the back-projection operation of the formula (1), the three-dimensional spatial position of the point group of the target obstacle in the camera coordinate system may be obtained. A denoising algorithm such as DBSACN is used to denoise and remove outliers from these points. Then, the RANSAC algorithm is used to estimate interior points, planes, and normal vectors of these point groups, thereby achieving estimation of the center point, the angle, and size of the static target. For other frames, since the global position of the static obstacle is consistent, the current target obstacle position may be projected back to other frames through the global back-projection strategy, that is, the obstacle in the current frame may be converted to a global coordinate system (i.e. the world coordinate system) and then to each frame, thereby effectively achieving annotation of the static obstacle.

For the dynamic target, the target pose of the dynamic target in the optimized frame is obtained based on the optimized $T_{ci2o}$, the three-dimensional box $obj_{init}$ detected from the reference frame based on the three-dimensional detection model, and the parameter sets such as $pts_{2d\_init}$, $K$, $T_{c2o}$, $obj_{init}$ and the like.

In summary, the solution proposed in the present disclosure addresses limitations of existing radar scanning ranges and automatic annotating schemes, achieving an improvement in static target detection and dynamic target annotation sight distance that do not rely on the three-dimensional detection model, which may support annotation of various static targets such as a low-rise stone pillar, a lamp post, and the like, while also extending the annotation sight distance of the dynamic target to a greater distance. These annotation data may be used to drive a BEV obstacle detection model at a vehicle end, greatly enhancing a model annotation ability and enabling a main vehicle to avoid obstacles in a timely manner.

Based on the same technical concept, the embodiment of the present disclosure further provides an apparatus for automatically annotating an obstacle 600, as shown in FIG. 6, it includes:

an optimization module 601 which configured to optimize a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle; and
a determination module 601 configured to determine a target pose of the target obstacle based on the optimized target parameter.

In some embodiments, the optimization module includes:

a projection unit configured to map a set of initial pixels of the target obstacle in the reference frame into the frame to be optimized based on the projection relationship, to obtain a set of projected points of the target obstacle in the frame to be optimized; and
an error determination unit configured to determine the re-projection error based on the set of projected points and true values of the projected points of the frame to be optimized.

In some embodiments, the optimization module includes:

a loss determination unit configured to determine a total projection loss based on the re-projection error and a depth regularization term of the projected points; and
an optimization unit configured to optimize the target parameter in the projection relationship based on the total projection loss.

In some embodiments, the depth regularization term is used to reduce dispersion degree of depth of each pixel of the target obstacle.

In some embodiments, for the frame to be optimized, the true values of the projected points required for the re-projection error are determined based on a pixel-level trajectory tracking method.

In some embodiments, the projection unit includes:

a back-projection subunit configured to perform a back-projection operation on the set of initial pixels of the target obstacle in the reference frame based on a pixel depth parameter, to obtain a first three-dimensional spatial position of the target obstacle in a camera coordinate system, the pixel depth parameter is used to represent a depth value of each of the initial pixels in the reference frame;

a conversion subunit configured to convert the first three-dimensional spatial position into the obstacle coordinate system based on a pose transformation parameter from the camera coordinate system to the obstacle coordinate system, to obtain a second three-dimensional spatial position; and

a projection subunit configured to project the second three-dimensional spatial position onto the frame to be optimized, to obtain the set of projected points.

In some embodiments, in a case where the target obstacle is a static target, the target parameter comprises the pixel depth parameter.

In some embodiments, in a case where the target obstacle is a dynamic target, the target parameter comprises the pixel depth parameter and the pose transformation parameter.

In some embodiments, the optimization module includes:

a first acquisition unit configured to acquire a first preset value of the pixel depth parameter; and

a first perturbation unit configured to perform random perturbation on the first preset value to obtain an initial value of the pixel depth parameter.

In some embodiments, the optimization module includes:

a second acquisition unit configured to acquire a second preset value of the pose transformation parameter; and

a second perturbation unit configured to perform random perturbation on the second preset value to obtain an initial value of the pose transformation parameter.

In some embodiments, the obstacle coordinate system is established based on a world coordinate system, in the case where the target obstacle is the dynamic target, the pose transformation parameter is the initial value of the pose transformation parameter superimposed with a transition term, the transition term is used to express a relative change of the target obstacle from the reference frame to the frame to be optimized, and the pose transformation parameter is optimized by optimizing the transition term.

In some embodiments, the projection unit is specifically configured to:

acquire a two-dimensional position box of the target obstacle detected from the reference frame by a two-dimensional detection model; and

uniformly scatter points based on the two-dimensional position box to obtain the set of initial pixels of the target obstacle in the reference frame.

In some embodiments, the projection unit is specifically configured to:

acquire a mask map of the target obstacle in the reference frame; and

uniformly scatter points based on the two-dimensional box of the target obstacle in the reference frame and the mask map, to obtain the set of initial pixels.

In some embodiments, the projection unit is specifically configured to:
segment the target obstacle from the reference frame by using a segmentation-anything model, to obtain the mask map of the target obstacle.

In some embodiments, the projection unit is specifically configured to:
select, based on an object feature of the target obstacle, an image in which saliency of the object feature satisfies a preset condition from a sequence of frames to be processed, as the reference frame.

In some embodiments, the projection unit is specifically configured to:

acquire an optimization direction, in a case where the target obstacle is a static target; and

select the frame to be optimized from a sequence of frames to be processed based on the reference frame and the optimization direction.

In some embodiments, the projection unit is specifically configured to:
acquire a frame image in which detection of the target obstacle is missed by a three-dimensional detection model as the frame to be optimized, in a case where the target obstacle is a dynamic target, the three-dimensional detection model is used for performing target detection on a point cloud or a two-dimensional image to obtain the target pose of the target obstacle.

In some embodiments, the projection unit is specifically configured to:
preferentially select a frame closest to the frame to be optimized and contains the target obstacle as the reference frame, in the case where the target obstacle is the dynamic target.

In some embodiments, the projection unit is specifically configured to:

acquire a detection result obtained by performing target detection on a sequence of frames to be processed by a two-dimensional image detection model; and

select a candidate object belonging to a target category as the target obstacle based on the detection result.

In some embodiments, the reference frame and the frame to be optimized each is a bird's-eye view during autonomous driving.

In some embodiments, a trajectory tracking module is further included, which is configured to:
track a trajectory of the target obstacle based on target poses of the target obstacle in different frame images, to obtain trajectory information of the target obstacle.

In some embodiments, a correction module is further included, which is configured to:

for a frame to be corrected in the trajectory information, determine a three-dimensional position box of the target obstacle in the frame to be corrected based on a two-dimensional position box of the target obstacle in the frame to be corrected, wherein the two-dimensional position box is obtained by detecting the target obstacle by a two-dimensional image detection model; and

correct a classification result of the three-dimensional position box of the frame to be corrected based on a classification result of the two-dimensional position box.

In some embodiments, a filtering module is further included, which is configured to:

determine a confidence level of the trajectory information, the confidence level is determined based on at least one of a confidence level of a two-dimensional position box of the target obstacle identified by a two-dimensional image detection model, an occlusion rate of the target obstacle, or an intersection-over-union between the two-dimensional position box and a three-dimensional position box of the target obstacle; and

determine the trajectory information is a false detected trajectory in a case where the confidence level is less than a target threshold.

In some embodiments, the determination module is specifically configured to:
determine the target pose of the target obstacle in the frame to be optimized based on a pose transformation parameter in the optimized target parameter, a camera intrinsic parameter and a three-dimensional position box of the target obstacle in the reference frame, in a case where the target obstacle is a dynamic target.

In some embodiments, the determination module is specifically configured to:

convert initial pixels of the target obstacle in the reference frame into a camera coordinate system based on the optimized target parameter, to obtain a first point group of the target obstacle in the camera coordinate system, in a case where the target obstacle is a static target; and

process the first point group by using a planar estimation apparatus, to obtain the target pose of the target obstacle in the reference frame.

In some embodiments, the determination module is further configured to:

convert the target pose of the target obstacle in the reference frame to a pose of the target obstacle in a target frame by using a global back-projection strategy,

the target frame is the frame to be optimized or an image frame that requires estimating the pose of the target obstacle other than the frame to be optimized.

Descriptions to specific functions and examples of each unit in the apparatus according to the embodiment of the present disclosure may refer to related descriptions to corresponding steps of the above method embodiments, and will not be repeated here

In the technical solution of the present disclosure, acquisition, storage and application of a user's personal information involved are all in compliance with provisions of relevant laws and regulations, and do not violate public order and good customs.

According to an embodiment of the present disclosure, the present disclosure further provides an electronic device, a readable storage medium and a computer program product.

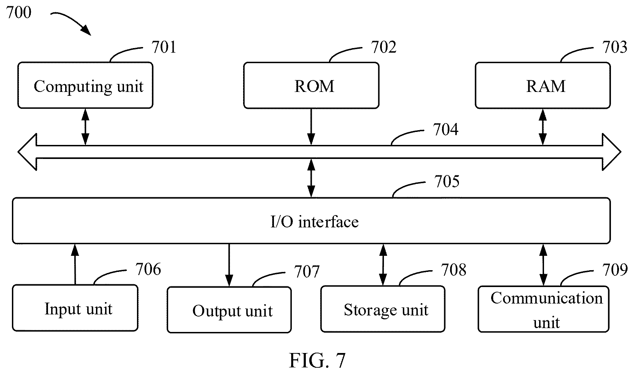

FIG. 7 shows a schematic block diagram of an exemplary electronic device 700 that may be used to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processing, a cellular phone, a smart phone, a wearable device and other similar computing devices. The components shown herein, their connections and relationships, and their functions are merely examples, and are not intended to limit the implementation of the present disclosure described and/or required herein.

As shown in FIG. 7, the device 700 includes a computing unit 701 that may perform various appropriate actions and processes according to a computer program stored in a Read-Only Memory (ROM) 702 or a computer program loaded from a storage unit 708 into a Random Access Memory (RAM) 703. Various programs and data required for an operation of the device 700 may also be stored in the RAM 703. The computing unit 701, the ROM 702 and the RAM 703 are connected to each other through a bus 704. An input/output (I/O) interface 705 is also connected to the bus 604.

A plurality of components in the device 700 are connected to the I/O interface 705, and include an input unit 706 such as a keyboard, a mouse, or the like; an output unit 707 such as various types of displays, speakers, or the like; the storage unit 708 such as a magnetic disk, an optical disk, or the like; and a communication unit 709 such as a network card, a modem, a wireless communication transceiver, or the like. The communication unit 709 allows the device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include, but are not limited to, a Central Processing Unit (CPU), a Graphics Processing Unit (GPU), various dedicated Artificial Intelligence (AI) computing chips, various computing units that run machine learning model algorithms, a Digital Signal Processor (DSP), and any appropriate processors, controllers, microcontrollers, or the like. The computing unit 701 performs various methods and processing described above, such as the method for automatically annotating an obstacle. For example, in some implementation, the method for automatically annotating an obstacle may be implemented as a computer software program tangibly contained in a computer-readable medium, such as the storage unit 708. In some implementations, a part or all of the computer program may be loaded and/or installed on the device 700 via the ROM 702 and/or the communication unit 709. When the computer program is loaded into RAM 703 and executed by the computing unit 701, one or more steps of the method for automatically annotating an obstacle described above may be performed. Alternatively, in other embodiments, the computing unit 701 may be configured to perform the method for automatically annotating an obstacle by any other suitable means (e.g., by means of firmware).

Various implements of the system and technologies described above herein may be implemented in a digital electronic circuit system, an integrated circuit system, a Field Programmable Gate Array (FPGA), an Application Specific Integrated Circuit (ASIC), an Application Specific Standard Product (ASSP), a System on Chip (SOC), a Complex Programmable Logic Device (CPLD), a computer hardware, firmware, software, and/or a combination thereof. These various implementations may include being implemented in one or more computer programs, and the one or more computer programs may be executed and/or interpreted on a programmable system including at least one programmable processor. The programmable processor may be a special-purpose or general-purpose programmable processor, may receive data and instructions from a storage system, at least one input device, and at least one output device, and transmit the data and the instructions to the storage system, the at least one input device, and the at least one output device.

Program codes for implementing the method of the present disclosure may be written in any combination of one or more programming languages. The program codes may be provided to a processor or controller of a general-purpose computer, a special-purpose computer or other programmable data processing devices, which enables the program codes, when executed by the processor or controller, to cause the functions/operations specified in the flow diagram and/or block diagram to be implemented. The program codes may be completely executed on a machine, partially executed on the machine, partially executed on the machine as a separate software package and partially executed on a remote machine, or completely executed on the remote machine or a server.

In the context of the present disclosure, a machine-readable medium may be a tangible medium, which may contain or store a procedure for use by or in connection with an instruction execution system, device or apparatus. The machine-readable medium may be a machine-readable signal medium or a machine-readable storage medium. The machine-readable medium may include, but is not limited to, an electronic, magnetic, optical, electromagnetic, infrared or semiconductor system, device or apparatus, or any suitable combination thereof. More specific examples of the machine-readable storage medium may include electrical connections based on one or more lines, a portable computer disk, a hard disk, a Random Access Memory (RAM), a Read-Only Memory (ROM), an Erasable Programmable Read-Only Memory (EPROM or a flash memory), an optical fiber, a portable Compact Disc Read-Only Memory (CD-ROM), an optical storage device, a magnetic storage device, or any suitable combination thereof.

In order to provide interaction with a user, the system and technologies described herein may be implemented on a computer that has: a display apparatus (e.g., a cathode ray tube (CRT) or a Liquid Crystal Display (LCD) monitor) for displaying information to a user; and a keyboard and a pointing device (e.g., a mouse or a trackball) through which the user may provide input to the computer. Other types of apparatuses may also be used to provide interaction with the user. For example, feedback provided to the user may be any form of sensory feedback (e.g., visual feedback, auditory feedback, or tactile feedback), and the input from the user may be received in any form (including an acoustic input, a voice input, or a tactile input).

The system and technologies described herein may be implemented in a computing system including a back-end component (which serves as, for example, a data server), or in a computing system including a middleware component (which serves as, for example, an application server), or in a computing system including a front-end component (e.g., a user computer with a graphical user interface or a web browser through which the user may interact with the implementation of the system and technologies described herein), or in a computing system including any combination of the back-end component, the middleware component, or the front-end component. Components of the system may be connected to each other through digital data communication in any form or medium (e.g., a communication network). Examples of the communication network include a Local Area Network (LAN), a Wide Area Network (WAN), and the Internet.

A computer system may include a client and a server. The client and the server are generally far away from each other and usually interact with each other through the communication network. A relationship between the client and the server is generated by computer programs running on corresponding computers and having a client-server relationship with each other. The server may be a cloud server, a distributed system server, or a blockchain server.

It should be understood that, steps may be reordered, added or removed by using various forms of the flows described above. For example, respective steps recorded in the present disclosure may be performed in parallel, in sequence, or in different orders, as long as a desired result of the technical scheme disclosed in the present disclosure can be realized, which is not limited herein.

The foregoing specific implementations do not constitute a limitation on the protection scope of the present disclosure. Those having skill in the art should understand that, various modifications, combinations, sub-combinations and substitutions may be made according to a design requirement and other factors. Any modification, equivalent replacement, improvement or the like made within the principle of the present disclosure shall be included in the protection scope of the present disclosure.

**Claims**

1. A method for automatically annotating an obstacle, comprising:

   optimizing (S101) a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle; and
   determining (S102) a target pose of the target obstacle based on the optimized target parameter.

2. The method of claim 1, further comprising:
   determining the re-projection error, by:

   mapping (S301) a set of initial pixels of the target obstacle in the reference frame into the frame to be optimized based on the projection relationship, to obtain a set of projected points of the target obstacle in the frame to be optimized; and
   determining (S302) the re-projection error based on the set of projected points and true values of the projected points of the frame to be optimized;
   wherein for the frame to be optimized, the true values of the projected points required for the re-projection error are determined based on a pixel-level trajectory tracking method;

wherein the reference frame and the frame to be optimized each is a bird's-eye view during autonomous driving.

3. The method of claim 1 or 2, wherein optimizing the target parameter in the projection relationship based on the re-projection error comprises:

determining a total projection loss based on the re-projection error and a depth regularization term of the projected points; and
optimizing the target parameter in the projection relationship based on the total projection loss;
wherein the depth regularization term is used to reduce dispersion degree of depth of each pixel of the target obstacle.

4. The method of claim 2, wherein mapping the set of initial pixels of the target obstacle in the reference frame into the frame to be optimized based on the projection relationship, to obtain the set of projected points of the target obstacle in the frame to be optimized, comprises:

performing (S3011) a back-projection operation on the set of initial pixels of the target obstacle in the reference frame based on a pixel depth parameter, to obtain a first three-dimensional spatial position of the target obstacle in a camera coordinate system, the pixel depth parameter is used to represent a depth value of each of the initial pixels in the reference frame;
converting (S3012) the first three-dimensional spatial position into the obstacle coordinate system based on a pose transformation parameter from the camera coordinate system to the obstacle coordinate system, to obtain a second three-dimensional spatial position; and
projecting (S3013) the second three-dimensional spatial position onto the frame to be optimized, to obtain the set of projected points;
wherein in a case where the target obstacle is a static target, the target parameter comprises the pixel depth parameter; and in a case where the target obstacle is a dynamic target, the target parameter comprises the pixel depth parameter and the pose transformation parameter;
wherein the obstacle coordinate system is established based on a world coordinate system; and in the case where the target obstacle is the dynamic target, the pose transformation parameter is the initial value of the pose transformation parameter superimposed with a transition term, the transition term is used to express a relative change of the target obstacle from the reference frame to the frame to be optimized, and the pose transformation parameter is optimized by optimizing the transition term.

5. The method of claim 4, further comprising:
determining an initial value of the pixel depth parameter, by:

acquiring a first preset value of the pixel depth parameter; and
performing random perturbation on the first preset value to obtain the initial value of the pixel depth parameter.

6. The method of claim 4, further comprising:
determining an initial value of the pose transformation parameter, by:

acquiring a second preset value of the pose transformation parameter; and
performing random perturbation on the second preset value to obtain the initial value of the pose transformation parameter.

7. The method of claim 2, further comprising:
determining the set of initial pixels of the target obstacle in the reference frame, by:

acquiring (S201) a two-dimensional position box of the target obstacle detected from the reference frame by a two-dimensional detection model; and
uniformly scattering (S202) points based on the two-dimensional position box to obtain the set of initial pixels of the target obstacle in the reference frame;
preferably, uniformly scattering points based on the two-dimensional box to obtain the set of initial pixels of the target obstacle in the reference frame comprises:

acquiring (S2021) a mask map of the target obstacle in the reference frame; and
uniformly scattering (S2022) points based on the two-dimensional box of the target obstacle in the reference frame and the mask map, to obtain the set of initial pixels;
preferably, acquiring the mask map of the target obstacle in the reference frame comprises:
segmenting the target obstacle from the reference frame by using a segmentation-anything model, to obtain the mask map of the target obstacle.

8. The method of any one of claims 1 to 7, further comprising:
determining the reference frame, by: selecting, based on an object feature of the target obstacle, an image in which saliency of the object feature satisfies a preset condition from a sequence of frames to be processed, as the reference frame.

9. The method of any one of claims 1 to 8, further comprising:
determining the frame to be optimized, by:

acquiring an optimization direction, in a case where the target obstacle is a static target; and
selecting the frame to be optimized from a sequence of frames to be processed based on the reference frame and the optimization direction.

10. The method of any one of claims 1 to 8, further comprising:

determining the frame to be optimized, by: acquiring a frame image in which detection of the target obstacle is missed by a three-dimensional detection model as the frame to be optimized, in a case where the target obstacle is a dynamic target, the three-dimensional detection model is used for performing target detection on a point cloud or a two-dimensional image to obtain the target pose of the target obstacle;
wherein a frame closest to the frame to be optimized and contains the target obstacle is preferentially selected as the reference frame, in the case where the target obstacle is the dynamic target.

11. The method of claim 1, further comprising:
determining the target obstacle, by:

acquiring a detection result obtained by performing target detection on a sequence of frames to be processed by a two-dimensional image detection model; and
selecting a candidate object belonging to a target category as the target obstacle based on the detection result.

12. The method of claim 1, further comprising:

tracking a trajectory of the target obstacle based on target poses of the target obstacle in different frame images, to obtain trajectory information of the target obstacle;
for a frame to be corrected in the trajectory information, determining a three-dimensional position box of the target obstacle in the frame to be corrected based on a two-dimensional position box of the target obstacle in the frame to be corrected, wherein the two-dimensional position box is obtained by detecting the target obstacle by a two-dimensional image detection model; and
correcting a classification result of the three-dimensional position box of the frame to be corrected based on a classification result of the two-dimensional position box.

13. The method of claim 12, further comprising:

determining a confidence level of the trajectory information, the confidence level is determined based on at least one of a confidence level of a two-dimensional position box of the target obstacle identified by a two-dimensional image detection model, an occlusion rate of the target obstacle, or an intersection-over-union between the two-dimensional position box and a three-dimensional position box of the target obstacle; and
determining the trajectory information is a false detected trajectory in a case where the confidence level is less than a target threshold.

14. The method of claim 1, wherein determining the target pose of the target obstacle based on the optimized target parameter comprises:
determining the target pose of the target obstacle in the frame to be optimized based on a pose transformation parameter in the optimized target parameter, a camera intrinsic parameter and a three-dimensional position box of the target obstacle in the reference frame, in a case where the target obstacle is a dynamic target.

15. The method of claim 1, wherein determining the target pose of the target obstacle based on the optimized target parameter comprises:

converting initial pixels of the target obstacle in the reference frame into a camera coordinate system based on the optimized target parameter, to obtain a first point group of the target obstacle in the camera coordinate system, in a case where the target obstacle is a static target;
processing the first point group by using a planar estimation method, to obtain the target pose of the target obstacle in the reference frame; and
converting the target pose of the target obstacle in the reference frame to a pose of the target obstacle in a target frame by using a global back-projection strategy;
wherein the target frame is the frame to be optimized or an image frame that requires estimating the pose of the target obstacle other than the frame to be optimized.

— S101

Optimize a target parameter in a projection relationship based on a re-projection error, the projection relationship is used to project a target obstacle from a reference frame onto a frame to be optimized, and satisfies a constraint in which positions of the target obstacle in different frames are consistent in an obstacle coordinate system established according to the target obstacle

— S102

Determine a target pose of the target obstacle based on the optimized target parameter

FIG. 1

— S201

Acquire a two-dimensional position box of the target obstacle detected from the reference frame by a two-dimensional detection model

— S202

Uniformly scattered points based on the two-dimensional box to obtain the set of initial pixels of the target obstacle in the reference frame

— S2021

Acquire a mask map of the target obstacle in the reference frame

— S2022

Uniformly scattered points based on the two-dimensional box of the target obstacle in the reference frame and the mask map, to obtain the set of initial pixels

FIG. 2

Map the set of initial pixels of the target obstacle in the reference frame into the frame to be optimized based on the projection relationship, to obtain a set of projected points of the target obstacle in the frame to be optimized — S301

Perform a back-projection operation on the set of initial pixels of the target obstacle in the reference frame based on a pixel depth parameter, to obtain a first three-dimensional spatial position of the target obstacle in the camera coordinate system, the pixel depth parameter is used to represent a depth value of each of the initial pixels in the reference frame — S3011

Convert the first three-dimensional spatial position into the obstacle coordinate system based on a pose transformation parameter from the camera coordinate system to the obstacle coordinate system, to obtain a second three-dimensional spatial position — S3012

Project the second three-dimensional spatial position onto the frame to be optimized, to obtain the set of projected points — S3013

Determine the re-projection error based on the set of projected points and the true values of the projected points of the frame to be optimized — S302

FIG. 3

FIG. 4

**OCBA service**

**Preprocessing**

Receiving request information:
1.Dynamic and static identification
2.Obstacle list
3.Starting frame
4.Two-dimensional box of starting frame
5.Optimize direction
6.Number of frames to be optimized
7.Pose information
8.OCBA related parameter settings

SAM segment → Co-tracker inference → Initial pixels

**Object-Centric BA optimization**

DataLoader
1.2D pixel of start frame
2.Ture value of 2D pixel of frame to be optimized
3.Camera intrinsic parameter
4.Depth value of point
5.Initial value of pose transformation parameter from camera coordinate system to obstacle coordinate system

Optimizer (BA process)

Initial pixels、Camera intrinsic parameter、Pixel depth parameter

3D spatial position point

Initial pose

Point in obstacle coordinate system

Camera intrinsic parameter

Pose to be optimized

2D pixel coordinate

True value of 2D pixel coordinate

Re-projection error

Visualization

Iterations of optimization

**Output**

Dynamic and static identification Obstacle list

Dynamic → Pose after optimizing

3D box detected from reference frame based on 3D detection model

Parameter sets

Static → Depth value after optimizing

Pose of dynamic target of frame to be optimized

Dynamic and static identification Obstacle list

Plane estimation

Pose of static target

FIG. 5

Apparatus for annotating an obstacle 600

Optimization module 601

Determination 602

FIG. 6

700

701
Computing unit

702
ROM

703
RAM

704

705
I/O interface

706
Input unit

707
Output unit

708
Storage unit

709
Communication unit

FIG. 7

EUROPEAN SEARCH REPORT

**Application Number**

EP 25 22 0464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/253066 A1 (BANSAL MAYANK [US]) 11 August 2022 (2022-08-11) | 1-3,8,9, 11,14,15 | INV. G06V20/58 |
| Y | * paragraph [0022] - paragraph [0023] * | 10,12,13 | G06V10/25 |
| A | * paragraph [0025] - paragraph [0027] * | 4-7 | G06V10/62 |
| | * paragraph [0058] * | | G06V10/776 |
| | * paragraph [0020] * | | G06V10/82 |
| | * paragraph [0064] * | | G06V20/40 |
| | * paragraph [0056] * | | G06V20/64 |
| | ----- | | |
| Y | WO 2024/073033 A1 (TESLA INC [US]) 4 April 2024 (2024-04-04) | 10,12,13 | |
| | * paragraph [0069] * | | |
| | * paragraph [0098] * | | |
| | * paragraph [0106] * | | |
| | * paragraph [0131] - paragraph [0132] * | | |
| | ----- | | |
| A | MERTAN ALICAN ET AL: "Single image depth estimation: An overview", DIGITAL SIGNAL PROCESSING, vol. 123, 25 January 2022 (2022-01-25), pages 1-18, XP093226113, ISSN: 1051-2004, DOI: 10.1016/j.dsp.2022.103441 * section 3.2 * ----- | 3,14 | **TECHNICAL FIELDS SEARCHED (IPC)** G06V |

The present search report has been drawn up for all claims

| Place of search | Date of completion of the search | Examiner |
|---|---|---|
| The Hague | 29 January 2026 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0464

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2026

| Patent document cited in search report | Publication date | Patent family member(s) | Publication date |
|---|---|---|---|
| US 2022253066 A1 | 11-08-2022 | CN 114402361 A | 26-04-2022 |
| | | EP 3994666 A1 | 11-05-2022 |
| | | JP 7376682 B2 | 08-11-2023 |
| | | JP 7650937 B2 | 25-03-2025 |
| | | JP 2022543355 A | 12-10-2022 |
| | | JP 2024014875 A | 01-02-2024 |
| | | KR 20220035946 A | 22-03-2022 |
| | | US 2021041883 A1 | 11-02-2021 |
| | | US 2022253066 A1 | 11-08-2022 |
| | | WO 2021026444 A1 | 11-02-2021 |
| WO 2024073033 A1 | 04-04-2024 | CN 120077403 A | 30-05-2025 |
| | | CN 120077414 A | 30-05-2025 |
| | | CN 120112913 A | 06-06-2025 |
| | | CN 120152893 A | 13-06-2025 |
| | | CN 120167069 A | 17-06-2025 |
| | | CN 120188124 A | 20-06-2025 |
| | | EP 4594153 A1 | 06-08-2025 |
| | | EP 4594838 A1 | 06-08-2025 |
| | | EP 4594935 A1 | 06-08-2025 |
| | | EP 4594990 A1 | 06-08-2025 |
| | | EP 4595021 A2 | 06-08-2025 |
| | | EP 4595022 A1 | 06-08-2025 |
| | | JP 2025532889 A | 03-10-2025 |
| | | JP 2025532890 A | 03-10-2025 |
| | | JP 2025532892 A | 03-10-2025 |
| | | JP 2025534315 A | 15-10-2025 |
| | | JP 2025535678 A | 28-10-2025 |
| | | JP 2025538073 A | 26-11-2025 |
| | | KR 20250073191 A | 27-05-2025 |
| | | KR 20250073480 A | 27-05-2025 |
| | | KR 20250078468 A | 02-06-2025 |
| | | KR 20250083496 A | 10-06-2025 |
| | | KR 20250083514 A | 10-06-2025 |
| | | KR 20250085753 A | 12-06-2025 |
| | | US 20260017875 A1 | 15-01-2026 |
| | | WO 2024073033 A1 | 04-04-2024 |
| | | WO 2024073115 A1 | 04-04-2024 |
| | | WO 2024073117 A1 | 04-04-2024 |
| | | WO 2024073741 A1 | 04-04-2024 |
| | | WO 2024073742 A1 | 04-04-2024 |
| | | WO 2024237939 A2 | 21-11-2024 |

EPO FORM P0459

For more details about this annex : see Official Journal of the European Patent Office, No. 12/82